# EUROPEAN PATENT SPECIFICATION

(11) **EP 1 987 634 B1**
(45) Date of publication and mention of the grant of the patent: **23.03.2011**
(21) Application number: 06804261.3
(22) Date of filing: 29.09.2006
(51) Int. Cl.: H04W 72/04

(54) **METHODS, SYSTEMS AND COMPUTER PROGRAM PRODUCTS FOR ESTABLISHING A POINT-TO-POINT COMMUNICATION CONNECTION**
VERFAHREN, SYSTEME UND COMPUTERPROGRAMMPRODUKTE ZUR HERSTELLUNG EINER PUNKT-ZU-PUNKT-KOMMUNIKATIONSVERBINDUNG
PROCEDES, SYSTEMES ET PROGRAMMES INFORMATIQUES POUR ETABLIR UNE CONNEXION DE COMMUNICATION DE POINT A POINT

(30) Priority: 21.02.2006 US 358448
(43) Date of publication of application: 05.11.2008
(73) Proprietor: Sony Ericsson Mobile Communications AB, 221 88 Lund (SE)
(72) Inventor: CAMP, William, O., Jr., Chapel Hill, North Carolina 27514 (US)
(74) Representative: Clarke, Alison Clare
(86) International application number: PCT/US2006/038105
(87) International publication number: WO 2007/097783

(56) References cited:
- EP-A1- 1 079 651
- WO-A-2005/084045
- US-A- 5 666 661
- US-A1- 2002 085 520
- US-B1- 6 415 146

## Description

### BACKGROUND OF THE INVENTION

The present invention relates to communication systems, methods and computer program products and, more particularly, to apparatus, methods and program products for set-up of communications.

A variety of different types of communications systems are used for communicating information, such as voice or data, between remote devices. These systems may be wired or wireless. While capacity limitations are a concern for both wired and wireless communication systems, they are generally more important for wireless systems, particularly as these systems expand from voice only communications support to providing a variety of data and media services that may require significant bandwidth to provide acceptable service to increasing numbers of consumers. Such wireless communications systems typically are restricted to use of a particular regulated portion of a wireless communication spectrum. Such restrictions may be important to limiting signal interference problems between overlapping ones of such systems. Accordingly, operators of wireless communication systems generally must balance addition of customers and services with available spectrum to provide services in a manner that will satisfy the expectations of those customers.

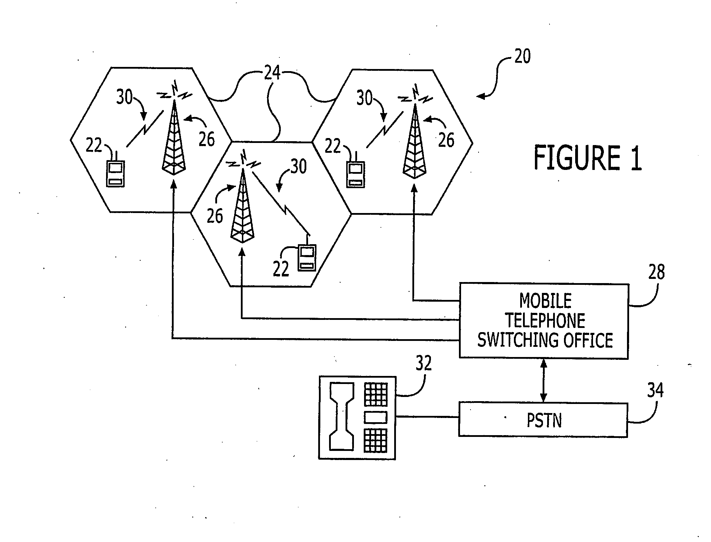

**Figure 1** illustrates a conventional terrestrial mobile (wireless) telecommunications network **20** that may implement any one of a variety of known wireless communications standards including uplink and downlink signals. A variety of wide area cellular networks are in use based on protocols, such as code division multiple access (CDMA), the Global System for Mobile communications (GSM) and the like. The wireless network may include one or more wireless mobile stations **22** that communicate with a plurality of cells **24** served by base stations **26** and a mobile telephone switching office (MTSO) **28.** Although only three cells 24 are shown in **Figure 1****,** a typical cellular radiotelephone network may comprise hundreds of cells, and may include more than one MTSO **28** and may serve thousands of wireless mobile stations **22.**

The cells **24** generally serve as nodes in the network 20, from which links are established between wireless mobile stations (terminals) **22** and a MTSO **28,** by way of the base stations **26** servicing the cells **24.** Each cell **24** will have allocated to it one or more dedicated control channels and one or more traffic channels. The control channel is a dedicated channel that may be used for downlink transmission (network to mobile) of cell identification and paging information. The traffic channels carry the voice and data information. Through the network 20, a duplex (downlink and uplink) radio communication link 30 may be effected between two wireless mobile stations 22 or between a wireless mobile station 22 and a landline telephone user 32 via a public switched telephone network (PSTN) 34. The function of the base station 26 is commonly to handle the radio communications between the cell 24 and the wireless mobile station 22. In this capacity, the base station 26 functions chiefly as a relay station for data and voice signals. It is also known to provide mobile telecommunications networks in which the base stations are satellites, having associated coverage areas, rather than terrestrial base stations.

Terminal location services may be provided by the network 20 using uplink and or downlink signals. In addition, other location approaches are known that are not associated with either the uplink or downlink signals used in the telecommunications network 20. For example, in a typically GPS application, the GPS receivers collect and analyze ranging measurements from signals transmitted by GPS satellites having known locations. Information from the GPS application may be available to the network 20 for use in tracking serviced mobile stations 22.
WO 2005/0840456 discloses a method for establishing a communication link between mobile terminals in a communication network in which a frequency is allocated to other subscribers on the basis of the frequency determined to be already supporting the direct communication links between the mobile terminals.

### SUMMARY OF THE INVENTION

Embodiments of the present invention include methods of establishing a point-to-point communication connection between a first terminal and a second terminal using an uplink radio resource of a wide area cellular network. An unused portion of the uplink radio resource of the wide area cellular network is allocated as a communication channel. The communication channel is assigned to establish the point-to-point communication connection. The wide area cellular network may have substantially similar uplink and downlink data rates.

In other embodiments of the present invention, a request is received from a terminal to establish the point-to-point communication connection and/or availability of the unused portion of the uplink radio resource for use in establishing point-to-point communication connections is detected. Allocating the unused portion and assigning the communication channel are performed responsive to receiving therequest from the terminal and/or detecting availability of the unused portion of the uplink radio resource.

In further embodiments, methods for establishing the point-to-point communication connection further include identifying a candidate communication connection between a first and a second terminal and determining if the candidate communication connection satisfies a point-to-point criterion. The candidate communication connection is selected for establishment as the point-to-point communication connection when the candidate communication connection satisfies the point-to-point criterion. An alternative communication connection that satisfies the point-to-point criterion is selected for establishment as the point-to-point communication connection when the candidate communication connection does not satisfy the point-to-point criterion.

In further embodiments, determining if the candidate communication connection satisfies the point-to-point criterion includes estimating a location of the first terminal and estimating a location of the second terminal. A distance between the first terminal and the second terminal is determined based on the estimated locations of the first and second terminals. The candidate communication connection is determined to satisfy the point-to-point criterion only if the determined distance between the first and the second terminal is less than a maximum distance. Determining if the candidate communication connection satisfies the point-to-point criterion may further include estimating a rate of change of the location of the first terminal and estimating a rate of change of the location of the second terminal. The candidate communication connection is determined to satisfy the point-to-point criterion only if the rate of change of the locations of the first and second terminals is less than a maximum rate. The maximum distance with or without the maximum rate may be selected based on a communication connection setup spectrum allocated for use in setting up and/or breaking down the point-to-point communication connection.

In other embodiments, assigning the communication channel includes assigning a traffic portion of the communication channel and a control portion of the communication channel to establish the point-to-point communication connection between a first and a second terminal. The first and/or the second terminal are configured to control the point-point communication connection using the assigned control portion. The first and/or the second terminal may be configured to control a transmit power used for the point-to-point communication connection based on a detected signal quality of the point-to-point communication connection and to request handoff of the point-to-point communication connection to a communication channel routed through the wide area cellular network based on the detected signal quality. A request to handoff the point-to-point communication connection may be received from the first and/or the second terminal and a replacement communication channel between the first terminal and the second terminal routed through the wide area cellular network may be established and the communication channel of the point-to-point communication connection may be re-allocated as an unused portion of the uplink radio resource of the wide area cellular network responsive to the received request to handoff the point-to-point communication connection.

In some embodiments, the replacement channel is established based on a cellular communication protocol of the wide area cellular network. The cellular communication protocol may be, for example, a wideband code division multiple access (WCDMA) protocol or a time division multiple access (TDMA) protocol.

In yet further embodiments, assigning the communication channel includes assigning the communication channel to establish the point-to-point communication connection between a first and a second terminal and the method further includes controlling use of the point-to-point communication connection by the first and second terminals using a system control channel established using a downlink radio resource of the wide area cellular network. The system control channel may be a control channel that is used to control access to the wide area cellular network.

In other embodiments, allocating an unused portion of the uplink radio resource may include establishing a full duplex communication channel having an associate frequency, code and/or time offset from the uplink channel allocated to the first terminal as the communication channel so that the first terminal does not concurrently transmit to the wide area cellular network using the uplink channel and receive communications from the second terminal on the full duplex communication channel.

In further embodiments, the wide area cellular network system is a WCDMA protocol network and allocating an unused portion of the uplink radio resource includes using a compressed mode of the WCDMA protocol network to provide a time offset between when the first terminal transmits signals to the WCDMA using the uplink channel and when the first terminal receives signals from the second terminal using the point-to-point communication connection. Allocating the unused portion of the uplink radio resource may further include using the compressed mode to provide a time offset between when the first terminal transmits signals to the WCDMA and receives signals from the second terminal and when the first terminal transmits to the second terminal using the point-to-point connection. Allocating the unused portion of the uplink radio resource may include assigning a same segment of the compressed mode but a assigning a different code for transmission of signals from the second terminal to the first terminal and transmissions from the first terminal to the second terminal using the point-to-point connection.

In other embodiments, the method further includes communicating between the first terminal and the second terminal using the point-to-point communication connection. The point-to-point communication connection may be a half-duplex communication connection.

In further embodiments, computer program products are provided for establishing a point-to-point communication connection between a first terminal and a second terminal using an uplink radio resource of a wide area cellular network that uses a portion of the uplink radio resource as an uplink channel for the first terminal for use in communications from the first terminal to a base station of the wide area cellular network. The computer program product includes computer program code embodied in a computer readable medium. The computer program code includes program code configured to allocate an unused portion of the uplink radio resource of the wide area cellular network as a bi-directional communication channel and program code configured to assign the bi-directional communication channel to establish the point-to-point communication connection between the first terminal and the second terminal.

In yet other embodiments, wide area cellular networks are provided including an allocation circuit configured to allocate an unused portion of an uplink radio resource of the wide area cellular network as a bi-directional communication channel, the uplink radio resource using a portion of the uplink radio resource as an uplink channel for the first terminal for use in communications from a first terminal to a base station of the wide area cellular network and an assignment circuit configured to assign the bi-directional communication channel to establish a point-to-point communication connection between a first terminal and a second terminal. The systems may further include a selection circuit configured to select a candidate communication connection between a pair of terminals for establishment as the point-to-point communication connection based on a point-to-point criterion. The point-to-point criterion may be a distance between the pair of terminals. The wide area cellular networks may further include a detection circuit configured to detect a quality of the point-to-point communication connection and a handoff circuit configured to establish a replacement communication between the pair of terminals routed through the wide area cellular network and to handoff the point-to-point communication connection to the replacement communication channel based on a detected quality of the point-to-point communication connection.

### BRIEF DESCRIPTION OF THE DRAWINGS

FIG. 1 is a schematic block diagram illustrating a conventional terrestrial wireless communication system.

FIG. 2 is a block diagram of a communication system according to some embodiments of the present invention.

FIGS. 3 through 6 are flowcharts illustrating establishing a point-to-point communication connection according to various embodiments of the present invention.

FIG. 7 is a graphical illustration of a compressed mode segment allocation according to some embodiments of the present invention.

### DETAILED DESCRIPTION OF EXEMPLARY EMBODIMENTS

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, a "terminal" includes both devices having only a wireless signal receiver without transmit abilities and devices having both receive and transmit hardware capable of two-way communication over a two-way communication link: Such devices may include cellular or other communications devices with or without a multi-line display; Personal Communications System (PCS) terminals that may combine a voice and data processing, facsimile and/or data communications capabilities; Personal Digital Assistants (PDA) that can include a radio frequency receiver and a pager, Internet/Intranet access, Web browser, organizer, calendar and/or a global positioning system (GPS) receiver; and/or conventional laptop and/or palmtop computers or other appliances, which include a radio frequency receiver. As used herein, "mobile terminals" may be portable, transportable, installed in a vehicle (aeronautical, maritime, or land-based), or situated and/or configured to operate locally and/or in a distributed fashion at any other location(s) on earth and/or in space.

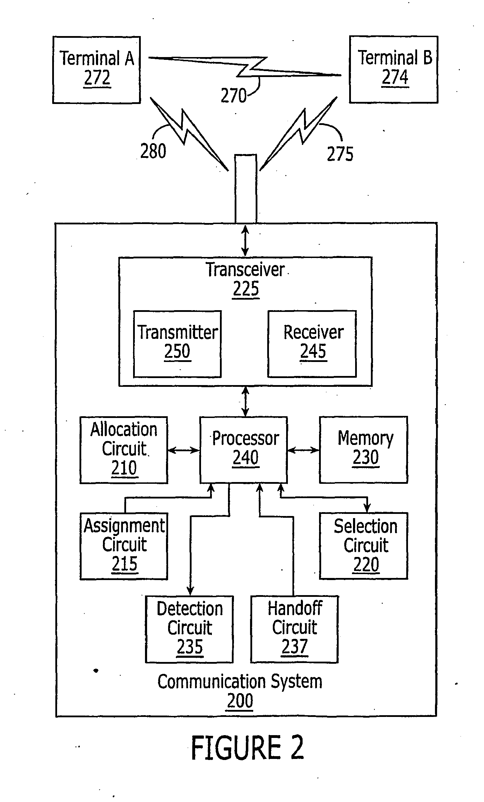

A communication system according to some embodiments of the present invention will now be described with reference to the block diagram illustration of **Figure 2****.** As shown in the embodiments of **Figure 2****,** a communication system **200** configured to establish point-to-point communication connections between terminals may include a network transceiver **225** for communicating with terminals. The network transceiver **225** typically comprises a transmitter circuit **250** and a receiver circuit **245,** which respectively transmit outgoing radio frequency signals to terminals **272, 274** and receive incoming radio frequency signals from the terminals **272, 274** via an antenna **265.** While a single antenna **265** is shown in **Figure 2****,** it is to be understood that multiple antennas and/or different types of antennas may be utilized based on the types of signals being received. The radio frequency signals transmitted between the communication system **200** and the terminals **272, 274** may comprise both traffic and control signals (*e.g*., paging signals/messages for incoming calls), which are used to establish and maintain communication with another party or destination, and may provide uplink and/or downlink communications.

As further shown in the embodiments of **Figure 2****,** the communication system **200** includes a processor **240** coupled to the transceiver **225.** The processor **240** is also coupled to a memory **230** that may be used to store data, programs and the like used by the processor **240** in carrying out operations as will be described further herein. In addition, a variety of operational circuits are shown coupled to the processor **240,** including an allocation circuit **210,** an assignment circuit **215,** a detection circuit **235,** a handoff circuit **237** and a selection circuit **220.** While shown as separate circuits in the embodiments of **Figure 2****,** it will be understood that, in various embodiments of the present invention the circuits **210, 215, 235, 237, 220** may be implemented in whole or in part as programmable code stored in the memory **230** and executed by the processor **240.**

In some embodiments of the present invention, the allocation circuit **210** is configured to allocate an unused portion of an uplink radio resource of the communication system **200** as a communication channel. The assignment circuit **215** is configured to assign the communication channel to establish a point-to-point communication connection, for example, between terminal A **272** and terminal B **274** using the unused portion of the uplink radio resource of the communication system **200.** Such a point-to-point communication connection is illustrated as communication connection **270** in **Figure 2****.** In some embodiments, the connection 270 may operate using existing methods and protocols, for example, such as Bluetooth. Also shown symbolically in **Figure 2** is a communication connection **275** between the communication system **200** and terminal B **274** and a communication connection **280** between the communication system **200** and terminal A **272.** The communication connections **275, 280** may include uplink portions and downlink portions having different associated frequencies and/or codes that may be used for controlling communications and supporting communications by the terminals **272, 274** using the communication system **200** and further may be used to control communications over the point-to-point communication connection **270** in some embodiments of the present invention as will be further described herein. In embodiments where the connection **270** is implemented using a method and protocol such as Bluetooth, the communication system connections **275, 280** may still be used to control and monitor the connection **270,** for example, to enable hand off back to the communication system **200** as needed.

In various embodiments of the present invention, the communication system **200** is a wide area cellular network, such as the network **20** described with reference to **Figure 1****.** Such wide area cellular networks typically are allocated fixed radio resource by a regulating authority. That radio resource is allocated by the communication network service provider for uplink communications (communications from a terminal **272, 274** to the communication system **200)** and downlink communications (used for communications from the communication system **200** to the terminals **272, 274).** The frequency spectrum used for uplink and downlink communications may be non-overlapping frequency spectrum and/or may be overlapping frequency spectrum using different spreading codes or the like, both of which may be referred to as "uplink frequency spectrum" or "downlink frequency spectrum" herein.

As wide area cellular networks are generally designed for voice communications, the amount of traffic on the uplink and downlink directions is expected to be substantially similar. Accordingly, such networks generally allocate their radio resource so as to have substantially similar uplink and downlink data rates and capacity. However, while some of the newer data services supported by such a communication system **200** may require similarly balanced data rates, such as Voice over Internet Protocol (VoIP) and video conferencing, many of these new data services tend to consume more downlink radio resource than uplink. For example, the multimedia broadcast/multicast service (MBMS) is a unidirectional point to multipoint bearer service in which data is transmitted from a single source to multiple recipients. The data may be associated with services in the form, for example, of streaming video and audio. Services such as MBMS generally require little or no uplink capacity.

In communication systems having a balanced uplink and downlink capacity designed for supporting voice communications, an increased use of data services by subscribers, such as MBMS, may result in greatly underutilizing the uplink capacity. Therefore, it may be desirable for the operator of the communication system **200** to modify operations to make use of that unused uplink capacity even though the configuration and allocation of the radio resource available to communication system **200** may need to be maintained as a balanced uplink and downlink radio resource configuration for various other reasons. Accordingly, the allocation circuit **210** and assignment circuit **215** may operate to allow the communication system **200** to establish the point-to-point communication connection **270** between terminal A **272** and terminal B **274** using such unused uplink capacity. As such, a communication service may be provided to terminal A **272** and terminal B **274** without requiring utilization of much, if any, of the downlink radio resource of the communication system **200,** thereby making that downlink radio resource available for use in establishing communication connections between terminals that are not located in a manner that would be suitable for use of a point-to-point communication connection.

As also shown in the schematic block diagram of **Figure 2****,** in some embodiments of the present invention, the communication system **200** includes the selection circuit **220** that is configured to select a candidate communication connection between a pair of terminals for establishment as the point-to-point communication connection **270** based on a point-to-point criterion. As will be further described herein, the point-to-point criterion may be, for example, a distance between a pair of terminals requesting a communication connection. Given typical limitations on both of the allowable transmission power used in the point-to-point communication connection **270** before interference may occur with other communications and power limitations on the respective terminals **272, 274,** the terminals allocated a point-to-point communication connection **270** must generally be close enough for such a communication connection to work properly. The communication system **200** may determine terminals **272, 274** are close enough to each other for assignment of the point-to-point communication connection **270** using location techniques, such as GPS, terrestrial based location services, such as uplink time difference of arrival (TDOA) type approaches, and/or based on cell identification for the respective base station **26** and cell **24** where the terminals **272, 274** are registered and located.

A communication system **200** may further make an estimate of whether the terminals **272, 274** will remain close enough to each other for a sufficiently long period of time to make assignment of a point-to-point communication **connection 270,** rather than a conventional wide area cellular network communication channel, appropriate. Such an estimate may be based, for example, on determining a rate of change of the location of the terminals **272, 274,** such as by monitoring doppler shifts and the like in the uplink signals or other rate of movement estimation techniques.

As also shown in **Figure 2****,** the communication system **200,** according to some embodiments of the present invention, further includes the detection circuit **235** configured to detect the quality of the point-to-point communication connection **270.** For example, when signal power levels associated with a point-to-point communication connection **270** drop below a specified criterion level, this may be interpreted as an indication that the point-to-point communication connection **270** is about to fail. These signal power level measurements in some embodiments may be reported to the communication system **200** via a communication system control channel or the like.

The handoff circuit **237** may be configured to establish a replacement communication connection between the pair of terminals **272, 274** routed through the communication system **200** responsive to an indication from the detection circuit **235** that the point-to-point communication connection **270** is about to fail. The handoff circuit **237** may further be configured to reallocate the portion of the uplink radio resource used as the communication channel for the point-to-point communication connection **270** as unused and to handoff the traffic from the point-to-point communication connection **270** to the replacement communication channel based on a detected quality of the point-to-point communication connection **270.** The replacement communication connection may be supported by the communication connections **275, 280** through the communication system **200** as shown in **Figure 2****.**

As previously discussed, both the uplink and the downlink communication connections are generally regulated spectrum under the control of the communication system **200.** Accordingly, as shown in the embodiments of **Figure 2****,** the allocation circuit **210** and the assignment circuit **215** may maintain control of the uplink spectrum under the control of the communication system **200** even when a portion of that spectrum is used as a point-to-point communication connection **270** between the terminals **272, 274.** This control of the spectrum allocation may be maintained even in embodiments of the present invention where control of the point-to-point communication connection **270** itself is turned over to either terminal A **272** and/or terminal B **274** during use of the point-to-point communication connection **270** for communications. The communication system **200** may grant the terminals **272, 274** access to the uplink spectrum in a variety of manners including, but not limited to, assigning specific frequencies and/or spreading codes in the case of a CDMA system and/or time slots, frequencies and the like in a time division multiple access (TDMA) protocol communication system.

As all of the communications over the point-to-point communication connection **270** are in the uplink radio resource, the terminals **272, 274** may be configured to both transmit and receive signals in the uplink radio resource band as well as being configured to receive communications from the communication system **200** in the downlink frequency band. While, in some embodiments of the present invention, the terminals **272, 274** may be configured for simultaneous reception in both the uplink and downlink bands, such simultaneous reception is not used in other embodiments of the present invention. Furthermore, as will be understood from the general operations of wide band code division multiple access (WCDMA) systems and the like, as well as TDMA, type systems, an unused portion of the uplink radio resource need not be an unused frequency but may be an unused spreading code, unused scrambling code, unused time window or the like using a frequency or frequencies in the uplink radio resource that are in use for other communications using different spreading codes, scrambling codes, time windows and/or the like.

As also noted previously, control over the point-to-point communication connection **270** may be maintained by the communication system **200** or some or all of the control may be turned over to the terminals **272, 274.** Where the point-to-point communication connection **270** is intensively controlled by the communication system **200,** the terminals **272, 274** may receive associated control instructions over the downlink portion of the communication connection channels **275, 280** between the respective terminals **272, 274** and the communication system **200,** which communications may be provided in a manner substantially similar to the control channel operations for conventional wide area cellular communications through the communications system **200.** In some embodiments, control is provided by the inclusion of additional appropriate commands within the control channel protocol. Thus, control operations over the point-to-point communication connection **270** may be simultaneously and compatibly provided with normal downlink control channel operations of the communication system **200** and normal downlink receiver operations in the terminals **272, 274,** with appropriate modifications to implement the various operations associated with a point-to-point communication connection **270** as described herein.

Control of the point-to-point communication connection **270** may include, for example, power control of transmissions by the terminals **272, 274** in the uplink radio resource band used for the point-to-point communication connection **270.** Such power transmission control may be under control of the communication system **200** or the terminals **272, 274** or a combination of both. If both, the communication system **200** may be configured to have the option to preempt power control by the terminals **272, 274,** for example, to avoid interference to a base station **26** of the communication system **200** while listening to other terminals at the base station **26** during normal mode operations of the wide area cellular network. The direct terminal control of power may be provided by each terminal making power measurements of received signals and sending appropriate power transmission correction requests to the other terminal. Thus, the point-to-point communication connection **270** may be allocated so as to provide both traffic and control channel portions of the communication connection **270.**

As discussed above, the handoff circuit **237** is configured to provide handoff of the point-to-point communication connection **270** based on a quality criterion or the like. The communication system **200** may provide additional monitoring of the progress of communications over the direct point-to-point communication connection **270** to determine, for example, when a call is completed or if it needs to be handed back to the communication system **200** for processing under normal wide area cellular network communication protocols for other reasons. In some embodiments, the point-to-point communication connection **270** may experience quality problems or the like that do not require conversion from point-to-point connection communications to conventional cellular communication connections. For example, a different frequency, spreading code, scrambling code, or the like associated with the uplink spectrum that is unused may be allocated that will provide better signal quality due to less interference or the like.

A transfer may be initiated based on detection of movement of the terminals in addition to or instead of the degradation of the signal quality in some embodiments as well. In any event, such monitoring of progress of the point-to-point communication connection **270** by the communication system **200,** in various embodiments, may be provided using existing signaling commands on a wide area cellular network control channel of the communication system **200** and may include added signaling information messages transmitted using such a control channel. The addition of such new messages may permit greater control and possibly more seamless behavior integrating the point-to-point communication connection **270** more smoothly with wide area cellular communications supported by the communication system **200.**

While control operations are generally described above in terms of signalling between terminals **272,274** and signalling between terminals **272,274** and the communication system **200,** or a combination thereof, in some embodiments the communication system **200** may directly monitor the terminal to terminal signalling that occurs over link **270** by, for example, tuning a local cell basestation receiver **245** to the same radio resource channel as is used for the link **270.** Thus, the signalling could be combined in a shared signalling structure in some embodiments.

In addition, while generally described as a two way communication connection that will appear to the terminals in performance substantially similar to a communication using the communication system **200** for uplink and downlink communications, the allocated point-to-point communication connection **270** in some embodiments may be a push-to-talk type connection sharing a single frequency, spreading code, scrambling code or the like between terminals **272, 274** and the terminals may be limited to only talk or listen and not full duplex operations when using the point-to-point communication connection **270** in such embodiments. Moreover, the communication connection **270** may also use more than one frequency, spreading code, scrambling code or the like to support full duplex communications between the terminals **272, 274.**

While embodiments of the present invention have been illustrated in **Figure 2** with reference to particular divisions between circuits, the present invention should not be construed as limited to the configurations of **Figure 2** but is intended to encompass any configuration capable of carrying out the operations described herein. Furthermore the functionality described herein may be provided, for example by plugins or other ancillary code to provide functionality to existing applications.

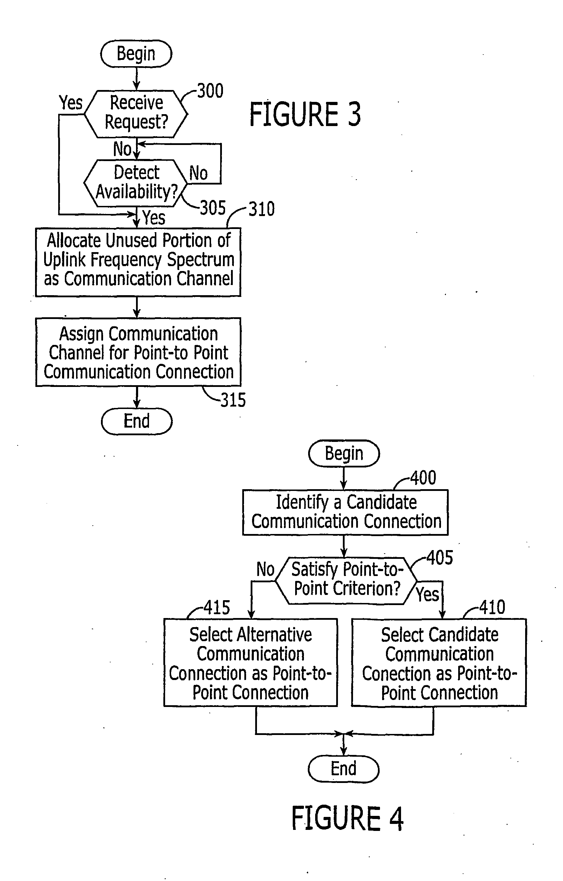

Operations for establishing a point-to-point communication connection according to various embodiments of the present invention will now be described with reference to the flow chart illustrations of **Figures 3-6****.** Referring first to the embodiments illustrated in **Figure 3****,** operations for establishing a point-to-point communication connection using an uplink radio resource (which may also be referred to as an uplink frequency spectrum) of a communication system may be initiated by receiving a request from a terminal to establish a point-to-point connection (block **300)** and/or detecting availability of an unused portion of the uplink radio resource (block **305).** In any event, regardless of the cause for initiating establishment of a point-to-point communication connection, an unused portion of the uplink radio resource of the communication system **200** is allocated as a communication channel (block **310).** The communication channel is assigned to establish the point-to-point communication connection (block **315).** The assignment may be to a terminal providing the request for the connection at block **300** or otherwise identified by the communication system **200.**

In some embodiments of the present invention, the communication system **200** may be a wide area cellular network that allocates an uplink channel to a first and/or second terminal **272, 274** that may use a point-to-point communication connection, where the uplink channel is used for communications from the first terminal to the wide area cellular network. In such embodiments, operations related to allocating an unused portion of the uplink radio resource at block **310** may include establishing a full duplex communication channel having an associated frequency, code, and/or time offset from the uplink channel allocated to the first terminal as the communication channel for use in the point-to-point communication connection so that the first terminal does not concurrently transmit to the wide area cellular network using the uplink channel and receive communications from the second terminal on the point-to-point communication connection. However, in other embodiments of the present invention, the first and/or second terminal **272, 274** may be configured so as to both transmit and receive on the uplink radio resource concurrently, for example, by inclusion of multiple transceivers therein. Furthermore, in other embodiments of the present invention as discussed above, a push-to-talk connection may be established rather than a full duplex communication point-to-point communication connection.

In particular embodiments, where the communication system **200** is a wide band code division multiple access (WCDMA) protocol network, operations related to allocating an unused portion of the uplink radio resource at block **310** may include using a compressed mode of the WCDMA protocol network to provide a time offset between when the first terminal transmits signals to the WCDMA network using the uplink channel and when the first terminal receives signals from the second terminal using the point-to-point communication connection. Operations at block **310** may further include using the compressed mode to provide a time offset between when the first terminal transmits signals to the WCDMA network and receives signals from a second terminal and when the first terminal transmits to the second terminal using the point-to-point communication connection **270.** In other embodiments, operations at block **310** may include assigning a same segment of the compressed mode but assigning a different code for transmission of signals from the second terminal to the first terminal and transmission from the first terminal to the second terminal using the point-to-point communication connection.

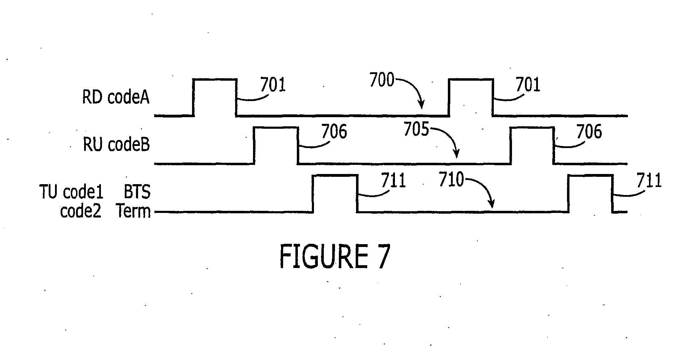

Use of compressed mode in a WCDMA system is further illustrated by the exemplary timing diagram illustration of **Figure 7****.** As shown in the graph **700** of **Figure 7****,** a first segment **701** is assigned to a terminal for receiving signals on the downlink radio resource using, for example, codeA. An offset segment **706** is assigned for use in receiving on the uplink radio resource as illustrated by the graph **705 and** may use codeB. Finally, a third offset segment **711** is shown in the graph **710** for use in transmitting on the uplink radio resource. Separate codes may be used for transmissions to a base station **26** of the communication system **200** and to transmit over the point-to-point communication connection to a terminal **272, 274** and/or a same code may be used and a respective base station and receiving terminal may listen in on communications to the other destination.

Operations related to establishing a point-to-point communication connection according to further embodiments of the present invention will now be described with reference to the flowchart illustration of **Figure 4****.** As shown for the embodiments of **Figure 4****,** operations begin by identifying a candidate communication connection between the first and second terminals (block **400).** For example, the identification may be based on a request received at block **300** of **Figure 3** from a requesting terminal. The request may also be, for example, an access request for establishing a conventional wide area cellular network communication connection and the communication system **200** may evaluate that request and decide to establish it as a point-to-point communication instead. If the candidate communication connection satisfies a point-to-point criterion (block **405),** the candidate communication connection is selected for establishment as the point-to-point communication connection (block **410).** If the candidate communication connection does not satisfy the point-to-point criterion (block **405),** an alternative communication connection that does satisfy the point-to-point criterion is selected for establishment as the point-to-point communication connection (block **415).**

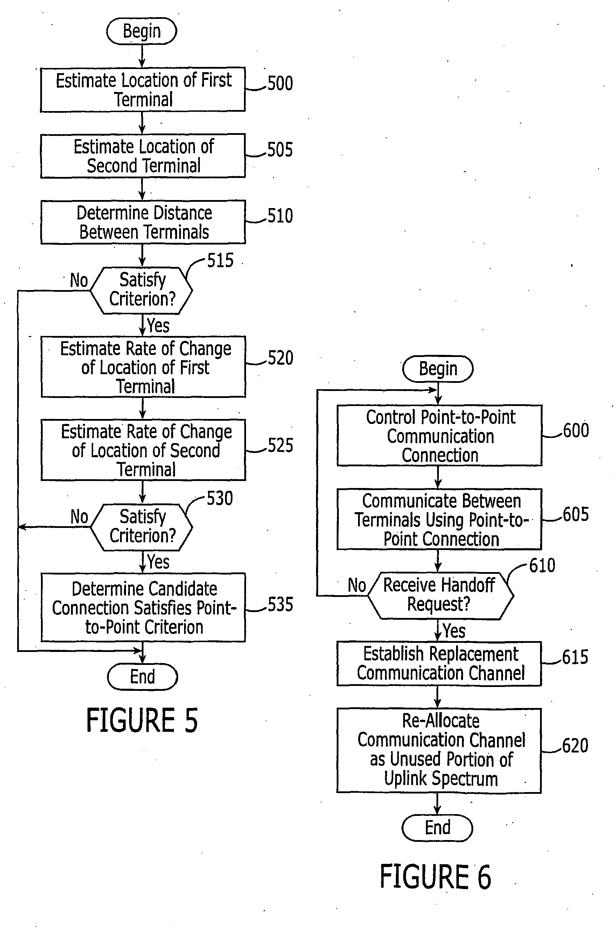

Further embodiments of methods for establishing a point-to-point communication connection using an uplink radio resource of the communication system **200** will now be described with reference to the flowchart illustration of **Figure 5****.** More particularly, **Figure 5** includes details, according to various embodiments of the present invention, of operations related to determining if a candidate communication connection satisfies the point-to-point criterion at block **405** of **Figure 4****.** For the embodiments illustrated in **Figure 5****,** operations begin by estimating a location of the first terminal (block **500)** and estimating a location of the second terminal (block **505).** A distance between the first terminal and the second terminal is determined based on the estimated locations of the first and second terminals (block **510).** For example, the first and second terminal may be GPS enabled devices providing location information to the communication system **200,** either directly or indirectly, and the communication system **200** may calculate a difference in the locations based on the known locations of the respective terminals.

In some embodiments, the communication system **200** itself may be configured to estimate the location of terminals served by the communication system **200,** using, for example, capability provided by emergency calling protocols supported by various wide area cellular communication networks or other terrestrial based location determination systems. Where sufficient power for the point-to-point connection may be utilized without interference with other communications, it may be sufficient to merely identify a cell **24 (****Figure 1****)** in which each of the terminals is located to provide sufficient location estimation information to determine if a connection between the two terminals may be appropriately established using a point-to-point communication connection. The candidate communication connection is determined to satisfy the point-to-point criterion only if the determined distance between the first and the second terminal is less than a maximum distance (block **515).**

In some embodiments of the present invention, if the maximum distance criterion is satisfied (block **515),** a rate of change of the location of the first terminal is estimated (block **520)** and a rate of change of the location of the second terminal is estimated (block **525).** The candidate communication connection is determined to satisfy the point-to-point criterion in such embodiments only if the rates of change of the locations of the first and second terminals are less than a maximum rate (block **530).** Thus, a communication system **200** may determine that the terminals are close enough to each other and further may determine that they are not moving too quickly before determining that it is appropriate to assign a point-to-point communication connection to the terminals. However, it will be understood that, in other embodiments of the present invention, the determination of suitability may be based solely on the location of the terminals without use of an additional assessment based on an estimation of a rate of change of locations of the terminals as an indication of how long a time period the terminals will likely stay in close enough distance to each other to make the terminals suitable for set-up and establishment of a point-to-point communication connection. In the embodiments illustrated in **Figure 5****,** it is determined that the candidate connection satisfied the point-to-point criterion only after both the location and rate of change criterion are satisfied (block **535).**

The maximum distance and/or the maximum rate may be, selected in some embodiments, based on a communication connection set-up radio resource allocated for use in setting up and/or breaking down the point-to-point communication connection. Thus, a decision may be made not to allocate a point-to-point communication connection as a way of utilizing unused uplink radio resource where the duration of the point-to-point communication connection is estimated to be so short lived that the savings in downlink spectrum will be offset by the spectrum utilized in establishing the point-to-point communication connection and/or subsequent handing off of that connection to a conventional wide area cellular network communication connection.

Operations according to further embodiments of the present invention associated with establishing and using a point-to-point communication connection will now be further described with reference to the flowchart illustration of **Figure 6****.** As illustrated in **Figure 6****,** the point-to-point communication connection has already been established and operations include controlling use of the point-to-point communication connection by the first and second terminals (block **600)** and communicating between the first terminal and the second terminal using the point-to-point communication connection (block **605).**

As discussed previously, control of the point-to-point communication connection at block **600** may be carried out by the communication system **200,** one or both of the terminals **272, 274** or a combination of the system **200** and the terminals **272, 274.** The communication system **200** may provide control at block **600** using a system control channel established by the communication system **200** using a portion of a downlink radio resource of the communication system **200.** The system control channel may be a specially established channel associated with the point-to-point communication connection and/or may be a control channel that is used to control access to the wide area cellular network in connection with conventional wide area cellular network communications. In either event, an existing signaling command and/or added signaling information messages may be used to control the point-to-point communication connection. Additional messages may be provided so as to allow greater control and/or more seamless behavior in transitioning between the point-to-point communication connection and conventional wide area cellular network communication channels of a connection between a first terminal and a second terminal.

As also shown in the embodiments of **Figure 6****,** if a request to handoff the point-to-point communication connection is received from the first and/or the second terminal (block **610),** the communication system **200** establishes a replacement communication channel between the first terminal and the second terminal routed through the communication system **200** and hands off the point-to-point communication connection to the replacement communication channel (block **615).** It will be understood that, in some embodiments of the present invention, a request may be initiated by the first terminal or the second terminal, for example, using a message on a control channel in the uplink radio resource of the communication system **200** or may be detected by the communication system **200** by monitoring signal strengths, quality or the like in the point-to-point communication connection and analysis of such information to identify automatically a request for handoff based on signal criteria or the like as applied to the monitored point-to-point communication connection. The communication system **200,** after handoff, may also reallocate the spectrum from the communication channel of the point-to-point communication connection as an unused portion of the uplink radio resource of the communication system **200** so that the spectrum may be used in establishing other point-to-point communication connections (block **620).**

In some embodiments, the communication system **200** is a wide area cellular network and the replacement channel is established based on cellular communication protocol of the wide area cellular network. The cellular communication protocol may be, for example, a wide band code division multiple access (WCDMA) protocol or a time division multiple access (TDMA) protocol.

Where control operations at block **600** are performed in whole or in part by the communicating terminals **272, 274,** operations for assigning a communication channel at block **315** of **Figure 3** may include assigning a traffic portion of the communication channel and a control portion of the communication channel to establish the point-to-point communication connection. The first and/or second terminal **272, 274** may be configured to control the point-to-point communication connection using the assigned control portion of the communication channel. For example, each of the terminals may monitor a signal strength and/or quality of signals received on the traffic portion of the communication channel and provide commands using the control portion to the transmitting terminal to request an adjustment in transmit power or the like. They may further be configured, in other embodiments, to transmit requests to the communication system **200** for allocation of a different frequency, spreading code, scrambling code or the like that is expected to provide a better signal quality. The first and/or second terminal **272, 274** may also be configured to provide a request for handoff at block **610** of **Figure 6** based on a comparison of a detected signal quality of the point-to-point communication connection to a handoff criterion.

As will be appreciated by one of skill in the art, the present invention may be embodied as a method, circuit or communication system. Accordingly, the present invention may take the form of an entirely hardware embodiment, an entirely software embodiment or an embodiment combining software and hardware aspects, all generally referred to herein as a "circuit."

Computer program code for carrying out operations of the present invention may be written in an object oriented programming language such as Java®, Smalltalk or C++, a conventional procedural programming languages, such as the "C" programming language, or lower-level code, such as assembly language and/or microcode. The program code may execute entirely on a single processor and/or across multiple processors, as a stand-alone software package or as part of another software package.

The present invention is described above with reference to flowchart illustrations and/or block and/or flow diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart and/or block and/or flow diagram block or blocks.

These computer program instructions may also be stored in a computer-readable memory that can direct a computer or other programmable processor to function in a particular manner, such that the instructions stored in the computer-readable memory produce an article of manufacture including instruction means which implement the function specified in the flowchart and/or block diagram block or blocks.

The computer program instructions may also be loaded onto a computer or other programmable data processor to cause a series of operational steps to be performed on the computer or other programmable processor to produce a computer implemented process such that the instructions which execute on the computer or other programmable processor provide steps for implementing the functions or acts specified in the flowchart and/or block diagram block or blocks.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A method of establishing a point-to-point communication connection between a first terminal (272) and a second terminal (274) using an uplink radio resource of a wide area cellular network that uses a portion of the uplink radio resource as an uplink channel for the first terminal (272) for use in communications from the first terminal (272) to a base station (26) of the wide area cellular network, the method comprising:
allocating an unused portion of the uplink radio resource of the wide area cellular network as a bi-directional communication channel;
assigning the bi-directional communication channel to establish the point-to-point communication connection between the first terminal (272) and the second terminal (274).

2. The method of Claim 1, wherein the wide area cellular network has substantially similar uplink and downlink data rates.

3. The method of Claim 1 or 2, further comprising:
receiving a request from a terminal (272, 274) to establish the point-to-point communication connection and/or detecting availability of the unused portion of the uplink radio resource for use in establishing point-to-point communication connections, wherein allocating the unused portion and assigning the communication channel are performed responsive to receiving the request from the terminal (272, 274) and/or detecting availability of the unused portion of the uplink radio resource;
identifying a candidate communication connection between a first and a second terminal (272, 274);
determining if the candidate communication connection satisfies a point-to-point criterion; and
selecting the candidate communication connection for establishment as the point-to-point communication connection when the candidate communication connection satisfies the point-to-point criterion and selecting an alternative communication connection that satisfies the point-to-point criterion for establishment as the point-to-point communication connection when the candidate communication connection does not satisfy the point-to-point criterion;
wherein determining if the candidate communication connection satisfies the point-to-point criterion comprises:
estimating a location of the first terminal (272);
estimating a location of the second terminal (274);
determining a distance between the first terminal (272) and the second terminal (274) based on the estimated locations of the first and second terminals (272, 274);
determining that the candidate communication connection satisfies the point-to-point criterion only if the determined distance between the first and the second terminal (272, 274) is less than a maximum distance;
estimating a rate of change of the location of the first terminal (272);
estimating a rate of change of the location of the second terminal (274); and
determining that the candidate communication connection satisfies the point-to-point criterion only if the rate of change of the locations of the first and second terminals (272, 274) is less than a maximum rate.

4. The method of Claim 3, wherein the maximum distance and/or the maximum rate are selected based on a communication connection setup spectrum allocated for use in setting up and/or breaking down the point-to-point communication connection.

5. The method of any one of the preceding claims, wherein assigning the communication channel comprises assigning a traffic portion of the communication channel and a control portion of the communication channel to establish the point-to-point communication connection between a first and a second terminal (272, 274) and wherein the first and/or the second terminal (272, 274) are configured to control the point-to-point communication connection using the assigned control portion;
wherein the first and/or the second terminal (272, 274) are configured to control a transmit power used for the point-to-point communication connection based on a detected signal quality of the point-to-point communication connection and to request handoff of the point-to-point communication connection to a communication channel routed through the wide area cellular network based on the detected signal quality and wherein the method further comprises:
receiving a request to handoff the point-to-point communication connection from the first and/or the second terminal (272, 274); and
establishing a replacement communication channel between the first terminal (272) and the second terminal (274) routed through the wide area cellular network and re-allocating the communication channel of the point-to-point communication connection as an unused portion of the uplink radio resource of the wide area cellular network responsive to the received request to handoff the point-to-point communication connection;
wherein the wide area cellular network comprises a wide area cellular network and wherein the replacement channel is established based on a cellular communication protocol of the wide area cellular network; and
wherein the cellular communication protocol comprises a wideband code divisional multiple access (WCDMA) protocol or a time division multiple access (TDMA) protocol.

6. The method of any one of the preceding claims, wherein assigning the communication channel comprises assigning the communication channel to establish the point-to-point communication connection between a first and a second terminal (272, 274) and wherein the method further comprises controlling use of the point-to-point communication connection by the first and second terminals (272, 274) using a system control channel established using a downlink radio resource of the wide area cellular network.

7. The method of Claim 6, wherein the system control channel comprises a control channel that is used to control access to the wide area cellular network.

8. The method of any one of the preceding claims, wherein allocating an unused portion of the uplink radio resource comprises establishing a full duplex communication channel having an associated frequency, code and/or time offset from the uplink channel allocated to the first terminal (272) as the communication channel so that the first terminal (272) does not concurrently transmit to the wide area cellular network using the uplink channel and receive communications from the second terminal (274) on the full duplex communication channel; and
wherein the wide area cellular network system comprises a wideband code divisional multiple access (WCDMA) protocol network and wherein allocating an unused portion of the uplink radio resource comprises using a compressed mode of the WCDMA protocol network to provide a time offset between when the first terminal (272) transmits signals to the WCDMA using the uplink channel and when the first terminal (272) receives signals from the second terminal (274) using the point-to-point communication connection.

9. The method of Claim 8, wherein allocating the unused portion of the uplink radio resource further comprises using the compressed mode to provide a time offset between when the first terminal (272) transmits signals to the WCDMA and receives signals from the second terminal (274) and when the first terminal transmits (272) to the second terminal (274) using the point-to-point connection.

10. The method of Claim 8, wherein allocating the unused portion of the uplink radio resource further comprises assigning a same segment of the compressed mode but assigning a different code for transmission of signals from the second terminal (274) to the first terminal (272) and transmissions from the first terminal (272) to the second terminal (274) using the point-to-point communication connection.

11. The method of Claim 1, wherein assigning the communication channel comprises assigning the communication channel to a first terminal (272) and a second terminal (274) and wherein the method further comprises communicating between the first terminal (272) and the second terminal (274) using the point-to-point communication connection.

12. A wide area cellular network, comprising:
an allocation circuit (210) configured to allocate an unused portion of an uplink radio resource of the wide area cellular network as a bi-directional communication channel, the wide area cellular network using a portion of the uplink radio resource as an wide area cellular network uplink channel for the first terminal (272) for use in communications from a first terminal (272) to a base station (26) of the wide area cellular network ; and
an assignment circuit (215) configured to assign the bi-directional communication channel to establish a point-to-point communication connection between a first terminal (272) and a second terminal (274).

13. The wide area cellular network of Claim 12, further comprising a selection circuit (220) configured to select a candidate communication connection between a pair of terminals (272, 274) for establishment as the point-to-point communication connection based on a point-to-point criterion.

14. The wide area cellular network of Claim 13, wherein the point-to-point criterion comprises a distance between the pair of terminals (272, 274).

15. The wide area cellular network of any one of claims 12 to 14, further comprising:
a detection circuit (235) configured to detect a quality of the point-to-point communication connection; and
a handoff circuit (237) configured to establish a replacement communication between the pair of terminals (272, 274) routed through the wide area cellular network and to handoff the point-to-point communication connection to the replacement communication channel based on a detected quality of the point-to-point communication connection.

## Patentansprüche

1. Verfahren zum Aufbau einer Punkt-zu-Punkt-Verbindung zwischen einem ersten Endgerät (272) und einem zweiten Endgerät (274) mit Hilfe einer Aufwärtsverbindungs-Hochfrequenzressource eines zellularen Fernbereichsnetzes, in dem ein Teil der Aufwärtsverbindungs-Hochfrequenzressource als Aufwärtsverbindungskanal für das erste Endgerät (272) genutzt wird, und zwar für die Verwendung bei Kommunikationsvorgängen vom ersten Endgerät (272) zu einer Basisstation (26) des zellularen Fernbereichsnetzes, wobei das Verfahren umfasst:
das Belegen eines nicht genutzten Teils der Aufwärtsverbindungs-Hochfrequenzressource des zellularen Fernbereichsnetzes als bidirektionaler Kommunikationskanal;
das Zuweisen des bidirektionalen Kommunikationskanals zum Herstellen der Punkt-zu-Punkt-Kommunikationsverbindung zwischen dem ersten Endgerät (272) und dem zweiten Endgerät (274).

2. Verfahren nach Anspruch 1, wobei das zellulare Fernbereichsnetz im Wesentlichen vergleichbare Aufwärtsverbindungs- und Abwärtsverbindungs-Datenraten aufweist.

3. Verfahren nach Anspruch 1 oder 2, zudem umfassend:
das Empfangen einer Anforderung von einem Endgerät (272, 274) zum Herstellen der Punkt-zu-Punkt-Kommunikationsverbindung und/oder zum Feststellen der Verfügbarkeit des ungenutzten Teils der Aufwärtsverbindungs-Hochfrequenzressource zum Gebrauch beim Aufbau von Punkt-zu-Punkt-Kommunikationsverbindungen, wobei das Belegen des ungenutzten Teils und das Zuweisen des Kommunikationskanals als Reaktion auf den Empfang der Anforderung von dem Endgerät (272, 274) und/oder das Feststellen der Verfügbarkeit des ungenutzten Teils der Aufwärtsverbindungs-Hochfrequenzressource erfolgt;
das Identifizieren einer infrage kommenden Kommunikationsverbindung zwischen einem ersten und einem zweiten Endgerät (272, 274);
das Feststellen ob die infrage kommende Kommunikationsverbindung ein Punkt-zu-Punkt-Kriterium erfüllt; und
das Wählen der infrage kommenden Kommunikationsverbindung zum Aufbauen als Punkt-zu-Punkt-Kommunikationsverbindung, falls die infrage kommende Kommunikationsverbindung das Punkt-zu-Punkt-Kriterium erfüllt, und das Wählen einer alternativen Kommunikationsverbindung, die das Punkt-zu-Punkt-Kriterium erfüllt, zum Aufbauen als Punkt-zu-Punkt-Kommunikationsverbindung, falls die infrage kommende Kommunikationsverbindung das Punkt-zu-Punkt-Kriterium nicht erfüllt;
wobei das Feststellen ob die infrage kommende Kommunikationsverbindung das Punkt-zu-Punkt-Kriterium erfüllt, umfasst:
das Schätzen eines Ortes des ersten Endgeräts (272);
das Schätzen eines Ortes des zweiten Endgeräts (274);
das Ermitteln einer Entfernung zwischen dem ersten Endgerät (272) und dem zweiten Endgerät (274) ausgehend von den geschätzten Orten des ersten und des zweiten Endgeräts (272, 274);
das Feststellen, dass die infrage kommende Kommunikationsverbindung das Punkt-zu-Punkt-Kriterium erfüllt, nur dann wenn die ermittelte Entfernung zwischen dem ersten und dem zweiten Endgerät (272, 274) geringer ist als eine maximale Entfernung;
das Schätzen einer Veränderungsrate des Ortes des ersten Endgeräts (272);
das Schätzen einer Veränderungsrate des Ortes des zweiten Endgeräts (274); und
das Feststellen, dass die infrage kommende Kommunikationsverbindung das Punkt-zu-Punkt-Kriterium erfüllt, nur dann wenn die Veränderungsrate der Orte des ersten und des zweiten Endgeräts (272, 274) geringer ist als eine maximale Rate.

4. Verfahren nach Anspruch 3, wobei die maximale Entfernung und/oder maximale Rate abhängig von einem Kommunikationsverbindungs-Aufbauspektrum gewählt wird, das zum Gebrauch beim Aufbauen und/oder Abbrechen der Punkt-zu-Punkt-Kommunikationsverbindung belegt wird.

5. Verfahren nach irgendeinem der vorhergehenden Ansprüche, wobei:
das Zuweisen des Kommunikationskanals das Zuweisen eines Verkehrsabschnitts des Kommunikationskanals und eines Kontrollabschnitts des Kommunikationskanals zum Aufbauen der Punkt-zu-Punkt-Kommunikationsverbindung zwischen einem ersten und einem zweiten Endgerät (272, 274) umfasst, und wobei das erste und/oder das zweite Endgerät (272, 274) dafür konfiguriert sind, die Punkt-zu-Punkt-Kommunikationsverbindung mit Hilfe des zugewiesenen Kontrollabschnitts zu steuern;
das erste und/oder das zweite Endgerät (272, 274) dafür konfiguriert sind, eine Sendeleistung zu steuern, die für die Punkt-zu-Punkt-Kommunikationsverbindung verwendet wird, und zwar abhängig von der erkannten Signalqualität der Punkt-zu-Punkt-Kommunikationsverbindung, und dafür, abhängig von der erkannten Signalqualität eine Übergabe der Punkt-zu-Punkt-Kommunikationsverbindung an einen Kommunikationskanal zu fordern, der durch das zellulare Fernbereichsnetz geführt ist, und das Verfahren ferner umfasst:
das Empfangen einer Anforderung zum Übergeben der Punkt-zu-Punkt-Kommunikationsverbindung vom ersten und/oder zweiten Endgerät (272, 274); und
das Aufbauen eines Ersatz-Kommunikationskanals zwischen dem ersten Endgerät (272) und dem zweiten Endgerät (274), der durch das zellulare Fernbereichsnetz geführt ist, und das Neuzuweisen des Kommunikationskanals der Punkt-zu-Punkt-Kommunikationsverbindung als unbenutzten Teil der Aufwärtsverbindungs-Hochfrequenzressource des zellularen Fernbereichsnetzes als Reaktion auf die empfangene Anforderung zum Übergeben der Punkt-zu-Punkt-Kommunikationsverbindung; wobei:
das zellulare Fernbereichsnetz ein zellulares Fernbereichsnetz enthält und wobei der Ersatzkanal gestützt auf ein zellulares Kommunikationsprotokoll des zellularen Fernbereichsnetzes aufgebaut wird; und
das zellulare Kommunikationsprotokoll ein Wideband Code Divisional Multiple Access Protokoll (WCDMA) oder ein Time Division Multiple Access Protokoll (TDMA) umfasst.

6. Verfahren nach irgendeinem der vorhergehenden Ansprüche, wobei das Zuweisen des Kommunikationskanals das Zuweisen des Kommunikationskanals zum Herstellen der Punkt-zu-Punkt-Kommunikationsverbindung zwischen einem ersten und einem zweiten Endgerät (272, 274) umfasst, und wobei das Verfahren zudem das Steuern des Gebrauchs der Punkt-zu-Punkt-Kommunikationsverbindung durch das erste und das zweite Endgerät (272, 274) mit Hilfe eines Systemsteuerkanals umfasst, der durch den Gebrauch einer Abwärtsverbindungs-Hochfrequenzressource des zellularen Fernbereichsnetzes hergestellt wird.

7. Verfahren nach Anspruch 6, wobei der Systemsteuerkanal einen Steuerkanal umfasst, der zum Steuern des Zugriffs auf das zellulare Fernbereichsnetz verwendet wird.

8. Verfahren nach irgendeinem der vorhergehenden Ansprüche, wobei:
das Zuweisen eines nicht verwendeten Abschnitts der Aufwärtsverbindungs-Hochfrequenzressource das Herstellen eines Vollduplex-Kommunikationskanals umfasst, der eine zugeordnete Frequenz-, Code-und/oder Zeitverschiebung gegen den Aufwärtsverbindungskanal aufweist, der dem ersten Endgerät (272) als Kommunikationskanal zugewiesen ist, so dass das erste Endgerät (272) nicht gleichzeitig mit Hilfe des Aufwärtsverbindungskanals in das zellulare Fernbereichsnetz sendet und Kommunikationsvorgänge vom zweiten Endgerät (274) auf dem Vollduplex-Kommunikationskanal empfängt; und
das zellulare Fernbereichsnetz-System ein Netz mit einem Wideband Code Divisional Multiple Access Protokoll (WCDMA) umfasst, und das Belegen eines unbenutzten Abschnitts der Aufwärtsverbindungs-Hochfrequenzressource das Nutzen eines komprimierten Modus des Netzes mit WCDMA-Protokoll umfasst, um einen Zeitversatz herzustellen, und zwar zwischen dem Senden von Signalen mit Hilfe des Aufwärtsverbindungskanals in das WCDMA durch das erste Endgerät (272) und dem Empfangen von Signalen von dem zweiten Endgerät (274) mit Hilfe der Punkt-zu-Punkt-Kommunikationsverbindung durch das erste Endgerät (272).

9. Verfahren nach Anspruch 8, wobei das Belegen des unbenutzten Abschnitts der Aufwärtsverbindungs-Hochfrequenzressource zudem das Verwenden des komprimierten Modus umfasst, um einen Zeitversatz herzustellen, und zwar zwischen dem Senden von Signalen in das WCDMA durch das erste Endgerät (272) und dem Empfangen von Signalen von dem zweiten Endgerät (274), und zwischen dem Senden des ersten Endgeräts (272) an das zweite Endgerät (274) mit Hilfe der Punkt-zu-Punkt-Verbindung.

10. Verfahren nach Anspruch 8, wobei das Belegen des unbenutzten Abschnitts der Aufwärtsverbindungs-Hochfrequenzressource zudem das Zuweisen eines gleichen Segments des komprimierten Modus umfasst, jedoch das Zuweisen eines unterschiedlichen Codes für das Senden von Signalen vom zweiten Endgerät (274) zum ersten Endgerät (272) und für Sendungen vom ersten Endgerät (272) zum zweiten Endgerät (274) mit Hilfe der Punkt-zu-Punkt-Kommunikationsverbindung.

11. Verfahren nach Anspruch 1, wobei das Zuweisen des Kommunikationskanals das Zuweisen des Kommunikationskanals an ein erstes Endgerät (272) und ein zweites Endgerät (274) umfasst, und das Verfahren weiterhin das Kommunizieren zwischen dem ersten Endgerät (272) und dem zweiten Endgerät (274) mit Hilfe der Punkt-zu-Punkt-Kommunikationsverbindung umfasst.

12. Zellulares Fernbereichsnetz, umfassend:
eine Belegungsschaltung (210), die dafür konfiguriert ist, einen nicht verwendeten Abschnitt einer Aufwärtsverbindungs-Hochfrequenzressource des zellularen Fernbereichsnetzes als bidirektionalen Kommunikationskanal zu belegen, wobei das zellulare Fernbereichsnetz einen Teil der Aufwärtsverbindungs-Hochfrequenzressource als Aufwärtsverbindungskanal für das erste Endgerät (272) nutzt, und zwar zum Gebrauch bei Kommunikationsvorgängen von einem ersten Endgerät (272) zu einer Basisstation (26) des zellularen Fernbereichsnetzes; und
eine Zuweisungsschaltung (215), die dafür konfiguriert ist, den bidirektionalen Kommunikationskanal zuzuweisen, damit eine Punkt-zu-Punkt-Kommunikationsverbindung zwischen einem ersten Endgerät (272) und einem zweiten Endgerät (274) hergestellt wird.

13. Zellulares Fernbereichsnetz nach Anspruch 12, zudem umfassend eine Auswahlschaltung (220), die dafür konfiguriert ist, eine infrage kommende Kommunikationsverbindung zwischen zwei Endgeräten (272, 274) zu wählen, und zwar für den Aufbau als Punkt-zu-Punkt-Kommunikationsverbindung abhängig von einem Punkt-zu-Punkt-Kriterium.

14. Zellulares Fernbereichsnetz nach Anspruch 13, wobei das Punkt-zu-Punkt-Kriterium eine Entfernung zwischen den zwei Endgeräten (272, 274) beinhaltet.

15. Zellulares Fernbereichsnetz nach irgendeinem der Ansprüche 12 bis 14, ferner umfassend:
eine Erkennungsschaltung (235), die dafür konfiguriert ist, die Qualität der Punkt-zu-Punkt-Kommunikationsverbindung zu erkennen; und
eine Übergabeschaltung (237), die dafür konfiguriert ist, eine Ersatzkommunikation zwischen den zwei Endgeräten (272, 274) herzustellen, die durch das zellulare Fernbereichsnetz geführt ist, und dafür, die Punkt-zu-Punkt-Kommunikationsverbindung an den Ersatz-Kommunikationskanal zu übergeben, und zwar abhängig von der erkannten Qualität der Punkt-zu-Punkt-Kommunikationsverbindung.

## Revendications

1. Procédé destiné à établir une connexion de communication point à point entre un premier terminal (272) et un second terminal (274) en faisant appel à une ressource radio en liaison montante d'un réseau cellulaire étendu qui utilise une partie de la ressource radio en liaison montante en qualité de canal en liaison montante pour le premier terminal (272) en vue d'une utilisation dans des communications du premier terminal (272) à une station de base (26) du réseau cellulaire étendu, le procédé comprenant les étapes ci-dessous consistant à:
affecter une partie inutilisée de la ressource radio en liaison montante du réseau cellulaire étendu en tant que canal de communication bidirectionnel;
affecter le canal de communication bidirectionnel en vue d'établir la connexion de communication point à point entre le premier terminal (272) et le second terminal (274).

2. Procédé selon la revendication 1, dans lequel le réseau cellulaire étendu présente des débits de données en liaison montante et en liaison descendante sensiblement similaires.

3. Procédé selon la revendication 1 ou 2, comprenant en outre les étapes ci-dessous consistant à:
recevoir une demande en provenance d'un terminal (272, 274) pour établir la connexion de communication point à point et/ou détecter la disponibilité de la partie inutilisée de la ressource radio en liaison montante destinée à être utilisée en vue d'établir des connexions de communication point à point, dans lequel les étapes d'affectation de la partie inutilisée et d'affectation du canal de communication sont mises en oeuvre en réponse à la réception de la demande en provenance du terminal (272, 274) et/ou à la détection de la disponibilité de la partie inutilisée de la ressource radio en liaison montante;
identifier une connexion de communication candidate entre un premier et un second terminal (272, 274);
déterminer si la connexion de communication candidate répond à un critère de communication point à point; et
sélectionner la connexion de communication candidate en vue de l'établir en tant que connexion de communication point à point lorsque la connexion de communication candidate satisfait au critère de communication point à point, et sélectionner une connexion de communication alternative qui satisfait au critère de communication point à point en vue de l'établir en tant que connexion de communication point à point lorsque la connexion de communication candidate ne satisfait pas au critère de communication point à point;
dans lequel l'étape consistant à déterminer si la connexion de communication candidate satisfait au critère de communication point à point comprend les étapes ci-dessous consistant à:
estimer une localisation du premier terminal (272);
estimer une localisation du second terminal (274);
déterminer une distance entre le premier terminal (272) et le second terminal (274) sur la base des localisations estimées des premier et second terminaux (272, 274);
déterminer que la connexion de communication candidate satisfait au critère de communication point à point uniquement si la distance déterminée entre le premier et le second terminal (272, 274) est inférieure à une distance maximale;
estimer un taux de modification de la localisation du premier terminal (272);
estimer un taux de modification de la localisation du second terminal (274); et
déterminer que la connexion de communication candidate satisfait au critère de communication point à point uniquement si le taux de modification des localisations des premier et second terminaux (272, 274) est inférieur à un taux maximum.

4. Procédé selon la revendication 3, dans lequel la distance maximale et/ou le taux maximum sont sélectionnés sur la base d'un spectre de configurations de connexion de communication affecté à une utilisation dans une configuration et/ou une mise à l'arrêt de la connexion de communication point à point.

5. Procédé selon l'une quelconque des revendications précédentes, dans lequel l'étape d'affectation du canal de communication comporte l'étape consistant à affecter une partie de trafic du canal de communication et une partie de commande du canal de communication en vue d'établir la connexion de communication point à point entre un premier et un second terminal (272, 274) et dans lequel le premier et/ou le second terminal (272, 274) sont configurés de manière à commander la connexion de communication point à point en faisant appel à la partie de commande affectée;
dans lequel le premier et/ou le second terminal (272, 274) sont configurés de manière à commander une puissance de transmission utilisée pour la connexion de communication point à point sur la base d'une qualité de signal détectée de la connexion de communication point à point et à demander un transfert intercellulaire de la connexion de communication point à point à un canal de communication acheminé par le biais du réseau cellulaire étendu sur la base de la qualité de signal détectée, et dans lequel le procédé comprend en outre les étapes ci-dessous consistant à:
recevoir une demande de transfert intercellulaire de la connexion de communication point à point en provenance du premier et/ou du second terminal (272, 274); et
établir un canal de communication de remplacement entre le premier terminal (272) et le second terminal (274), acheminé par le biais du réseau cellulaire étendu et réaffecter le canal de communication de la connexion de communication point à point sous la forme d'une partie inutilisée de la ressource radio en liaison montante du réseau cellulaire étendu en réponse à la demande reçue connexe au transfert intercellulaire de la connexion de communication point à point;
dans lequel le réseau cellulaire étendu comprend un réseau cellulaire étendu et dans lequel le canal de remplacement est établi sur la base d'un protocole de communication cellulaire du réseau cellulaire étendu; et
dans lequel le protocole de communication cellulaire comprend un protocole d'accès multiple par répartition en code à large bande (WCDMA) ou un protocole d'accès multiple par répartition dans le temps (TDMA).

6. Procédé selon l'une quelconque des revendications précédentes, dans lequel l'étape consistant à affecter le canal de communication comporte l'étape consistant à affecter le canal de communication en vue d'établir la connexion de communication point à point entre un premier et un second terminal (272, 274), et dans lequel le procédé comporte en outre l'étape consistant à commander l'utilisation de la connexion de communication point à point par les premier et second terminaux (272, 274) en faisant appel à un canal de commande de système établi en faisant appel à une ressource radio en liaison descendante du réseau cellulaire étendu.

7. Procédé selon la revendication 6, dans lequel le canal de commande de système comprend un canal de commande lequel est utilisé pour commander l'accès au réseau cellulaire étendu.

8. Procédé selon l'une quelconque des revendications précédentes, dans lequel l'étape consistant à affecter une partie inutilisée de la ressource radio en liaison montante comprend l'étape consistant à établir un canal de communication bidirectionnel simultané, présentant une fréquence, un code et/ou un décalage temporel connexe, du canal en liaison montante affecté au premier terminal (272) en qualité de canal de communication, de sorte que le premier terminal (272), de manière simultanée, n'émet pas vers le réseau cellulaire étendu en utilisant le canal en liaison montante et ne reçoit pas de communications en provenance du second terminal (274) sur le canal de communication bidirectionnel simultané; et
dans lequel le système de réseau cellulaire étendu comprend un réseau de protocole d'accès multiple par répartition en code à large bande (WCDMA), et dans lequel l'étape consistant à affecter une partie inutilisée de la ressource radio en liaison montante comporte l'étape consistant à utiliser un mode compressé du réseau de protocole d'accès WCDMA pour fournir un décalage temporel entre le moment où le premier terminal (272) transmet des signaux au réseau de protocole d'accès WCDMA en faisant appel au canal en liaison montante et le moment où le premier terminal (272) reçoit des signaux en provenance du second terminal (274) en utilisant la connexion de communication point à point.

9. Procédé selon la revendication 8, dans lequel l'étape consistant à affecter la partie inutilisée de la ressource radio en liaison montante comprend en outre l'étape consistant à utiliser le mode compressé pour fournir un décalage temporel entre le moment où le premier terminal (272) transmet des signaux au réseau d'accès WCDMA et reçoit des signaux en provenance du second terminal (274) et le moment où le premier terminal (272) transmet au second terminal (274) en utilisant la connexion point à point.

10. Procédé selon la revendication 8, dans lequel l'étape consistant à affecter la partie inutilisée de la ressource radio en liaison montante comprend en outre l'étape consistant à affecter un même segment du mode compressé mais à affecter un code différent pour la transmission de signaux du second terminal (274) au premier terminal (272) et pour les transmissions du premier terminal (272) au second terminal (274) au moyen de la connexion de communication point à point.

11. Procédé selon la revendication 1, dans lequel l'étape consistant à affecter le canal de communication comporte l'étape consistant à affecter le canal de communication à un premier terminal (272) et à un second terminal (274), et dans lequel le procédé comprend en outre l'étape consistant à communiquer entre le premier terminal (272) et le second terminal (274) en utilisant la connexion de communication point à point.

12. Réseau cellulaire étendu, comprenant:
un circuit d'allocation (210) configuré de manière à allouer une partie inutilisée d'une ressource radio en liaison montante du réseau cellulaire étendu en qualité de canal de communication bidirectionnel, le réseau cellulaire étendu utilisant une partie de la ressource radio en liaison montante en tant que canal en liaison montante pour le premier terminal (272) en vue d'une utilisation dans des communications d'un premier terminal (272) à une station de base (26) du réseau cellulaire étendu; et
un circuit d'affectation (215) configuré de manière à affecter le canal de communication bidirectionnel en vue d'établir une connexion de communication point à point entre un premier terminal (272) et un second terminal (274).

13. Réseau cellulaire étendu selon la revendication 12, comprenant en outre un circuit de sélection (220) configuré de manière à sélectionner une connexion de communication candidate entre une paire de terminaux (272, 274) en vue de l'établir en tant que connexion de communication point à point sur la base d'un critère de communication point à point.

14. Réseau cellulaire étendu selon la revendication 13, dans lequel le critère de communication point à point comprend une distance entre la paire de terminaux (272, 274).

15. Réseau cellulaire étendu selon l'une quelconque des revendications 12 à 14, comprenant en outre:
un circuit de détection (235) configuré de manière à détecter une qualité de la connexion de communication point à point; et
un circuit de transfert intercellulaire (237) configuré de manière à établir une communication de remplacement entre la paire de terminaux (272, 274) acheminée par le biais du réseau cellulaire étendu, et à mettre en ouvre un transfert intercellulaire de la connexion de communication point à point au canal de communication de remplacement sur la base d'une qualité de la connexion de communication point à point détecté.
